# EUROPÄISCHE PATENTSCHRIFT

(11) **EP 0 403 585 B1**
(45) Veröffentlichungstag und Bekanntmachung des Hinweises auf die Patenterteilung: **10.02.1993**
(21) Anmeldenummer: 89907139.3
(22) Anmeldetag: 20.06.1989
(51) Int. Cl.: G01C 15/00

(54) **VERMESSUNGSGERÄT MIT EMPFÄNGER FÜR SATELLITEN-POSITIONSMESSSYSTEM UND VERFAHREN ZU SEINEM BETRIEB**
SURVEYING INSTRUMENT WITH RECEIVER FOR A SATELLITE POSITION MEASUREMENT SYSTEM AND PROCESS FOR OPERATING IT
APPAREIL GEODESIQUE AVEC RECEPTEUR POUR SYSTEMES DE MESURE DE LA POSITION DE SATELLITES ET SON PROCEDE D'EXPLOITATION

(30) Priorität: 06.07.1988 CH 2569/88
(43) Veröffentlichungstag der Anmeldung: 27.12.1990
(73) Patentinhaber: Leica Heerbrugg AG, CH-9435 Heerbrugg (CH)
(72) Erfinder: INGENSAND, Hilmar, Dr., CH-9443 Widnau (CH)
(86) Internationale Anmeldenummer: EP8900690
(87) Internationale Veröffentlichungsnummer: WO9000718

(56) Entgegenhaltungen:
- MICROWAVE JOURNAL, vol. 29, no. 4, April 1986, (Dedham, Massachusetts, US), M.R. Stiglitz : "The Global Positioning System", pages 34-36,38,42,44,46,50,52,54,56-59
- HEWLETT-PACKARD JOURNAL, vol. 31, no. 9, September 1980 (Palo Alto, California, US), A.F. Gort : "A Fully Integrated, Microprocessor-controlled Total Station", pages 3-11

## Beschreibung

Die Erfindung betrifft ein Vermessungsgerät mit Empfänger für ein Satelliten-Positionsmess-System, nach dem Oberbegriff des Patentanspruchs 1, sowie ein Verfahren zu dessen Betrieb.

Satelliten-Positionsmess-Systeme ermöglichen eine terrestrische Positionsbestimmung mit geodätischer Genauigkeit. Voraussetzung ist der Einsatz eines auf das System abgestimmten Empfängers, bei Feldmessungen eines Mobilgerätes. Der Empfänger ist direkt mit einer Antenne ausgerüstet, deren Position mit Hilfe des Systems erkannt wird. Wegen der quasi-optischen Ausbreitungseigenschaften des für das Uebertragungssystem gewählten Wellenbereichs kann ein brauchbarer Empfang der Satellitensignale nur gewährleistet werden, wenn die Empfängerantenne im direkten Sichtbereich mehrerer Satelliten des Systems liegt. Diese Voraussetzung ist nicht für alle Vermessungsaufgaben erfüllt. Punkte, die im Zenitbereich durch Hindernisse abgedeckt sind und damit nicht im Empfangbereich der Satelliten liegen, konnten bisher mit diesem Systems nicht vermessen werden.

Aus der Druckschrift "Microwave Journal, Band 29, Nr.4, M.R. Stiglitz, The global positioning system, Seiten 34 ff." wird neben den allgemeinen Möglichkeiten der Koordinatenbestimmung mit einem Satelliten-Positionsmeß-System auch eine kombinierte Koordinatenbestimmung mit zwei separat arbeitenden Satelliten-Systemen beschrieben. Die Vermessung bzw. Bestimmung von Punkten, welche sich außerhalb des Satelliten-Empfangsbereich/Sichtbereich befinden, ist in dieser Schrift nicht angegeben. Ferner fehlen Hinweise darauf, wie an sich bekannte geodätische Meßinstrumente mit einem derartigen Satelliten-Positionsmeß -System kombiniert werden können.

Es daher Aufgabe der vorliegenden Erfindung, die Vermessung von Punkten mit Hilfe eines Satelliten-Systems zu ermöglichen, die nicht im direkten Sichtbereich der Satelliten liegen. Diese Aufgabe wird erfindungsgemäß durch die Merkmale des Patentanspruchs 1 gelöst. Vorteilhafte Weiterbildungen der Erfindung sind Gegenstand der Unteransprüche. Ein erfindungsgemäßes Verfahren zum Betrieb des Gerätes ist in Patentanspruch 4 angegeben.

Durch die dort definierten Maßnahmen wird es möglich, auch solche Punkte koordinatenmäßig zu bestimmen, welche unter Einsatz von Satelliten-Positionsmeß-Systemen bisher nicht vermessen werden konnten. Damit wird z. B. die Feldvermessung wesentlich vereinfacht, da nur noch Geräte für die Vermessung nach dem Satellitensystem mitgeführt werden müssen.

Einzelheiten der Erfindung werden im folgenden anhand schematisch dargestellten Ausführungsbeispielen mit Hilfe der Zeichnungen näher erläutert. Es zeigen:
Fig. 1 das Beispiel eines Vermessungsgerätes zur Vermessung von Punkten, die nicht im Empfangsbereich eines Satelliten-Positionsmeß-Systems liegen, und
Fig. 2 das Beispiel einer Feldmessung unter Einsatz mindestens eines Gerätes nach Fig. 1, mit zwei Hilfs-Meßpunkten, die im Empfangsbereich eines Satelliten-Positionsmeß-Systems liegen.

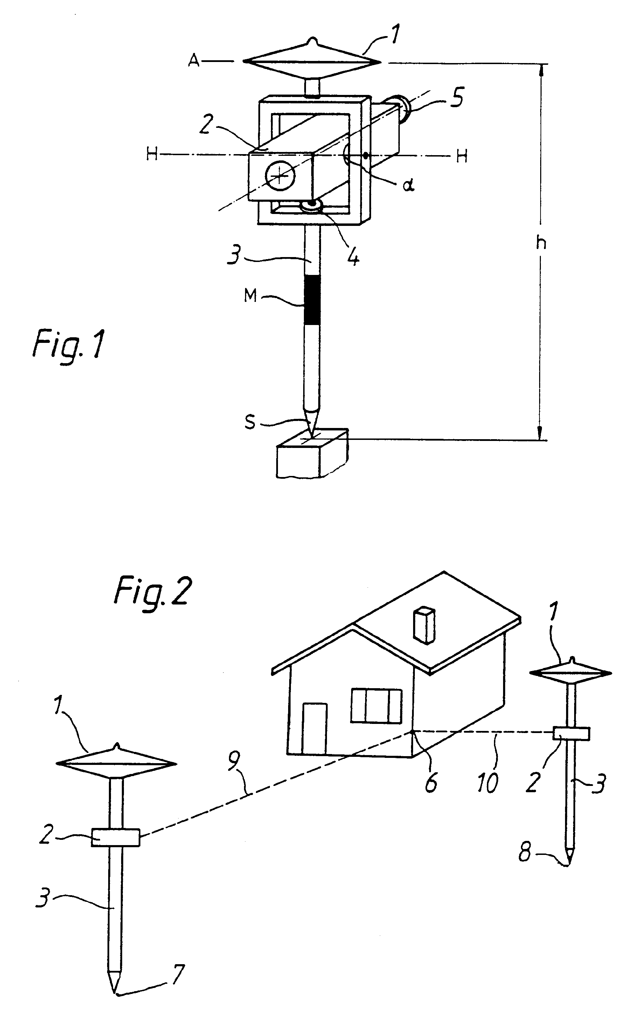

Gemäß Fig. 1 besteht ein erfindungsgemäßes Meßgerät aus einem auf das Satelliten-Positionsmeß-System abgestimmten Empfänger 1 mit entsprechender Antenne. Im Beispiel ist der Empfänger vorzugsweise für den Empfang des Global-Positioning-System GPS eingerichtet. Das Gerät enthält ferner einen Distanzmesser 2, vorzugsweise einen elektrooptischen oder einen auf dem Ultraschallprinzip beruhenden Distanzmesser. Ein elektrooptischer Distanzmesser ist vorzugsweise vom Typ, wie er in der Patentschrift CH 641 308 oder CH 644 243 beschrieben ist. Die beiden erwähnten Module Empfänger 1 und Distanzmesser 2 sind geometrisch eindeutig auf einem Lotstab 3 montiert, der als Zusatzeinrichtung einen Lotsensor 4 zur Bestimmung der lokalen physikalischen Lotrichtung aufweist.

Der Distanzmesser 2 ist mit einer Visiereinrichtung 5 versehen, welche koaxial zur optischen Achse des Distanzmessers angeordnet ist. Die Visiereinrichtung ist dergestalt konstruiert, daß der Beobachter gleichzeitig die Vertikalstellung des Lotstabes 3 und einen angezielten Punkt im Sichtfeld beobachten kann. Die Visiereinrichtung kann mit einem auf das Magnetfeld der Erde reagierenden Sensor ausgerüstet sein.

Vorzugsweise ist der Distanzmesser 2 um eine Horizontalachse H kippbar. Das Maß der Kippdrehung wird über einen Winkelgeber oder einen elektronischen Neigungsmesser alpha erfaßt.

Ferner ist der Lotstab 3 vorzugswseise teleskopartig ausziehbar ausgebildet. An seinem unteren Ende weist er eine übliche Lotstabspitze S auf. Der Lotstab 3 kann schließlich mit einem Längen-Messsystem, vorzugsweise einem Massstab M versehen sein, der eine Bestimmung des Abstandes h zwischen der Lotstabspitze S und dem Antennenzentrum A erlaubt.

Der im Beispiel direkt unter dem Empfänger 1 angeordnete Distanzmesser 2 ermöglicht Streckenmessungen zu entfernten Punkten, z.B. zu dort angebrachten Reflektoren. Im Beispiel nach Fig. 2 stellt Punkt 6 einen solchen entfernten Punkt dar. Die Distanzmessung kann aber auch nach anderen berührungslosen Verfahren ohne Verwendung eines Zielreflektors vorgenommen werden.

Ein einzumessender Punkt 6 wird mit der Visiereinrichtung 5 angezielt, wobei gleichzeitig der lotrechte Stand des Gerätes in der Visiereinrichtung kontrolliert wird. Für geneigte Visuren wird der Distanzmesser 2 um die Horizontalachse H gekippt, wobei diese Drehung vom Winkelgeber oder Neigungsmesser alpha erfasst wird. Mit dieser Hilfe wird die gemessene Schrägstrecke auf den Horizont reduziert.

Befindet sich der einzumessende Punkt 6 nicht im direkten Sichtbereich der Satelliten, wird z.B. eine Messeinheit 1-5 nacheinander in der Nähe des zu vemessenden Punktes 6 an mindestens zwei verschiedenen vom Satellitensystem erreichbaren Hilfspunkten 7, 8 aufgestellt. Von diesen Hilfspunkten aus werden die Strecken 9 und 10 zu dem für das Satellitensystem unzugänglichen Punkt 6 im Beispiel elektrooptisch bestimmt. Mittels Bogenschlagverfahrens lassen sich dann die Koordinaten des einzumessenden Punktes eindeutig ermitteln. Stehen zwei Messeinheiten zur Verfügung, wird je eine von ihnen an den Hilfspunkten 7 und 8 aufgestellt und die Messung im übrigen auf die beschriebene Weise durchgeführt.

Mit dem beschriebenen Verfahren ist es möglich, "quasi-kinematische" Messungen, also Messungen, die jeweils in Perioden von einigen Sekunden'abgeschlossen sind, durch zusätzliche Streckenmessungen geometrisch zu stützen, indem die Position der Messeinheit über Rückwärtsschnittverfahren bestimmt werden kann.

## Patentansprüche

1. Vermessungsgerät mit einem Empfänger (1) für ein Satelliten-Positionsmeß-System mit einem vorzugsweise berührungslos messenden Distanzmesser (2) zur geodätischen Bestimmung von Meßpunkten (6), dadurch gekennzeichnet, daß der Satelliten-Empfänger (1) und der Distanzmesser (2) in geometrisch eindeutig definierter Relativposition zueinander auf einem gemeinsamen Lotstab (3) angeordnet sind, der Distanzmesser (2) kippbar ausgebildet ist und zusätzlich eine Visiereinrichtung (5) zum Anzielen des Meßpunktes (6) sowie ein Lotsensor (4) zur Einstellung der Lotrichtung des Vermessungsgeräts vorgesehen sind.

2. Vermessungsgerät nach Anspruch 1, dadurch gekennzeichnet, daß der Lotstab (3) mit einem Längenmeßsystem (M) zur Bestimmung des Abstands (h) zwischen der Lotstabspitze (S) und dem Antennenzentrum (A) des Satelliten-Empfängers (1) ausgestattet ist.

3. Vermessungsgerät nach Anspruch 1, dadurch gekennzeichnet, daß der Satelliten-Empfänger (1) und der Distanzmesser (2) mit je einer Schnittstelle zur Daten- und/oder Befehlsübertragung ausgebildet sind.

4. Verfahren zur Bestimmung eines nicht im direkten Sichtbereich des Satelliten befindlichen Meßpunktes (6) mit einem Vermessungs-Gerät nach Anspruch 1, dadurch gekennzeichnet, daß mindestens zwei Hilfspunkte (7, 8), welche sich im Empfangsbereich des Satelliten befinden vermessen werden, wobei von jedem Hilfspunkt (7, 8) aus der Meßpunkt (6) mit der Visiereinrichtung (5) angezielt und gleichzeitig der lotrechte Stand des Meßsystems mit dem Lotsensor (4) kontrolliert und die jeweilige Distanz der Hilfspunkte (7, 8) zum Meßpunkt (6) bestimmt und aus diesen ermittelten Werten die Position des Meßpunktes (6) rechnerisch ermittelt wird.

## Claims

1. Surveying instrument with a receiver (1) for a satellite position measurement system with a distance measuring device 12), preferably measuring contactlessly, for geodetical determination of measurement points (6), characterised thereby that the satellite receiver (1) and the distance measuring device (2) are arranged in geometrically unambiguously defined relative position with respect to each other on a common plumb rod (3), which distance measuring device (2) is constructed to be tiltable and in addition a sighting equipment (5) for the sighting of the measurement point (6) as well as a verticality sensor (4) for the setting up of the vertical direction of the measuring instrument are provided.

2. Surveying instrument according to claim 1, characterised thereby that the plumb rod (3) is equipped with a length measuring system (M) for determination of the distance (h) between the tip (S) of the plumb rod and the antenna centre (A) of the satellite receiver (1).

3. Surveying instrument according to claim 1, characterised thereby that the satellite receiver (1) and the distance measuring device (2) are each constructed with an interface for data and/or command transmission.

4. Method for the determination of a measurement point (6), which is not disposed in direct visual range, with a surveying instrument according to claim 1, characterised thereby that at least two auxiliary points (7, 8), which are disposed in the reception range of the satellite, are measured, wherein the measuring point (6) is sighted from each auxiliary point (7, 8) by the sighting equipment (5) and at the same time the vertical state of the measuring system is checked by the verticality sensor (4) and the respective distance of the auxiliary points (7, 8) to the measurement point (6) is determined and the position of the measurement point (6) is ascertained by computer from these ascertained values.

## Revendications

1. Appareil géodésique avec un récepteur (1) pour un système de mesure de la position de satellites comprenant un dispositif de mesure de distance (2) mesurant de préférence sans contact pour la détermination géodésique de points de mesure (6), caractérisé en ce que le récepteur de satellites (1) et le dispositif de mesure de distance (2) sont disposés suivant une position relative géométrique définie de façon non ambigüe l'un par rapport à l'autre sur une tige d'aplomb (3) commune, en ce que le dispositif de mesure de distance (2) est réalisé de façon basculante et en ce qu'on a prévu en plus un dispositif de visée (5) pour viser le point de mesure (6) ainsi qu'un capteur d'aplomb (4) pour le réglage de la direction verticale de l'appareil de mesure.

2. Appareil géodésique selon la revendication 1, caractérisé en ce que la tige d'aplomb (3) est équipée d'un système de mesure de longueur M pour déterminer l'écart (h) entre la pointe de tige d'aplomb S et le centre d'antenne A du récepteur satellite (1).

3. Appareil géodésique selon la revendication 1, caractérisé en ce que le récepteur satellite (1) et le dispositif de mesure de distance (2) présentent chacun une interface pour la transmission des données et/ou de commandes.

4. Procédé pour la détermination d'un point de mesure (6) qui n'est pas situé dans l'étendue de visée directe du satellite avec un appareil géodésique selon la revendication 1, caractérisé en ce qu'on mesure au moins deux points auxiliaires (7, 8) qui se situent dans la zone de réception du satellite, et à partir de chaque point auxiliaire (7, 8) on vise le point de mesure (6) avec le dispositif de visée (5) et on contrôle en même temps l'état vertical du système de mesure avec le capteur d'aplomb (4), et en ce qu'on détermine la distance respective des points auxiliaires (7, 8) au point de mesure (6) et qu'on obtient par calcul à partir de ces valeurs obtenues la position du point de mesure (6).
